(19) Europäisches Patentamt
European Patent Office
Office européen des brevets

(11) **EP 4 421 933 A1**

(12) **EUROPEAN PATENT APPLICATION**
published in accordance with Art. 153(4) EPC

(43) Date of publication:
**28.08.2024 Bulletin 2024/35**

(51) International Patent Classification (IPC):
**H01M 10/0565** (2010.01) **H01M 10/058** (2010.01)
**H01M 10/05** (2010.01) **H01M 50/40** (2021.01)

(21) Application number: **22914716.0**

(52) Cooperative Patent Classification (CPC):
**H01M 10/05; H01M 10/0565; H01M 10/058;
H01M 50/40;** Y02E 60/10; Y02P 70/50

(22) Date of filing: **26.12.2022**

(86) International application number:
**PCT/CN2022/142124**

(87) International publication number:
**WO 2023/125462 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 CN 202111609879**

(71) Applicant: **Hefei Gotion High-Tech Power Energy
Co., Ltd.
Hefei, Anhui 230012 (CN)**

(72) Inventors:
• **ZHU, Guannan
Hefei, Anhui 230012 (CN)**
• **LI, Yang
Hefei, Anhui 230012 (CN)**
• **XU, Tao
Hefei, Anhui 230012 (CN)**
• **WANG, Yifei
Hefei, Anhui 230012 (CN)**

(74) Representative: **HGF
HGF Limited
1 City Walk
Leeds LS11 9DX (GB)**

(54) **RAW MATERIAL COMPOSITION, THERMOSETTING PAN-BASED INTERMEDIATE FILM AND PREPARATION METHOD THEREFOR, AND ELECTROCHEMICAL DEVICE**

(57) Provided in the present disclosure are a raw material composition, a thermosetting PAN-based intermediate film and a preparation method therefor, and an electrochemical device. The raw material composition includes a thermosetting PAN-based polymer material, a lithium salt, and a modification additive; a mass ratio of the thermosetting PAN-based polymer material to the lithium salt is 20:1-3:1, and a mass ratio of the thermosetting PAN-based polymer material to the modification additive is 18:1-3:1; and the modification additive includes one of or a combination of several of a carbonate modification additive, a nitrile modification additive, and an ionic liquid modification additive. Further provided in the present disclosure is the thermosetting PAN-based intermediate film, which is prepared by pre-mixing a raw material composition, then performing melt extrusion, and then performing stretching treatment and/or thin film shaping treatment on a prototype thick film obtained by extrusion. According to the present disclosure, the use of a modification additive may reduce a melting point of a PAN-based polymer and ensure that the PAN-based polymer is not thermally decomposed in a melting process, and may also improve the lithium ion conductivity of a film.

Fig. 2

## Description

## Technical Field

The present disclosure relates to a raw material composition, a thermosetting PAN-based intermediate film and a preparation method therefor, and an electrochemical device. The intermediate film includes a diaphragm for a liquid electrochemical device, as well as a solid electrolyte film for a solid electrochemical device, and belongs to the technical field of design and preparation of key materials of electrochemical energy storage devices.

## Background

Current large-scale commercialized lithium ion batteries commonly use organic carbonate-based liquid electrolyte, and thus have safety issues such as leakage, combustion, explosion, etc. Furthermore, as the energy density of the battery continues to increase, the safety of the battery continues to decline, becoming a key factor restricting the development of the lithium ion batteries. The thermal stability and mechanical strength of an intermediate diaphragm used in liquid lithium ion batteries play a critical role in battery safety. On the one hand, if a diaphragm having an ionic conduction function is used, the use amount of electrolyte may be greatly reduced, and at the same time, if the high heat-resistant and high-strength characteristics of the diaphragm are combined, it may comprehensively improve the safety performance of the liquid batteries. On the other hand, in order to fundamentally solve the problem of battery safety, solid batteries that are formed by using solid electrolyte to replace the existing electrolyte and conventional diaphragm have excellent safety performance, high energy density, and a wide range of operating temperatures, and thus has been recognized as one of the most promising commercialization of the next generation of lithium ion batteries.

So far, solid battery electrolyte has developed various types of solid electrolyte materials such as sulfide electrolyte, oxide electrolyte, polymer electrolyte, and halide electrolyte. The polymer electrolyte has the optimal processing performance, and is considered to be the first type of solid electrolyte expected to be pushed into industrial applications, while PAN-based polymer electrolyte has received extensive attention and research due to their high lithium ion conductivity. Chinese Patent CN110165291A further discloses a PAN-based composite electrolyte comparable to liquid electrolyte and its preparation method. A large specific interface area is constructed by using processes such as spray spinning, such that the ionic conductivity of the PAN-based polymer electrolyte is greatly improved by using a surface lithium ion conduction mechanism. However, devices required for the spray-spinning process require high accuracy, low yield, poor consistency, and high difficulty in continuous production, inhibiting the development of industrialization, while a thermal decomposition temperature of thermosetting PAN-based polymer is lower than a melting point temperature of the polymer, causing the traditional melt extrusion stretching polymer film-forming process to be not able to be successfully applied in the preparation method of such polymer electrolyte.

Therefore, providing a new raw material composition, preparation method and application for preparing a thermosetting PAN-based intermediate film has become an urgent technical problem in the art.

## Summary

In order solve disadvantages and deficiencies mentioned above, one objective of the present disclosure is to provide a raw material composition for preparing a thermosetting PAN-based intermediate film.

Another objective of the present disclosure is to provide a method for preparing a thermosetting PAN-based intermediate film.

Still another objective of the present disclosure is to provide a thermosetting PAN-based intermediate film.

The last objective of the present disclosure is to provide an electrochemical device.

In order to implement the above objectives, the present disclosure provides a raw material composition for preparing a thermosetting PAN-based intermediate film. The raw material composition includes a thermosetting PAN-based polymer material, a lithium salt, and a modification additive.

A mass ratio of the thermosetting PAN-based polymer material to the lithium salt is 20:1 - 3:1, and a mass ratio of the thermosetting PAN-based polymer material to the modification additive is 18:1-3:1.

The modification additive includes one of or a combination of several of a carbonate modification additive, a nitrile modification additive, and an ionic liquid modification additive.

As a specific implementation of the raw material composition described above in the present disclosure, the raw material composition further includes a ceramic material, and taking a total weight of the thermosetting PAN-based polymer material as 100%, a use amount of the ceramic material is 5-80wt%.

As a specific implementation of the raw material composition described above in the present disclosure, the use amount of the ceramic material is 10-50wt%.

As a specific implementation of the raw material composition described above in the present disclosure, the ceramic material includes an inorganic ionic conductor and/or inorganic non-ionic conductor.

As a specific implementation of the raw material composition described above in the present disclosure, the inorganic ionic conductor includes one or more of oxide, halide, sulphide, nitride, and carbide, and the inorganic non-ionic conductor comprises one or more of metal oxide and non-metal oxide.

As a specific implementation of the raw material composition described above in the present disclosure, the ceramic material includes one or more of titanium-containing oxide, aluminum-containing oxide, boron-containing oxide, zirconium-containing oxide, and silicon containing oxide.

As a specific implementation of the raw material composition described above in the present disclosure, the ceramic material includes one of or a combination of several of silicon dioxide, alumina, lithium titanium aluminum phosphate, lithium borate, lithium borate ester, lithium zirconate, garnet type lithium lanthanum zirconium oxygen, lithium indium chloride halide, argyrodite type sulfide, lithium borohydride, and lithium lanthanum zirconium tantalum oxygen fast ion conductors. The ceramic material used in the present disclosure is commercially available or may be prepared by using existing conventional methods.

As a specific implementation of the raw material composition described above in the present disclosure, the modification additive is the carbonate modification additive or the nitrile modification additive. Using the modification additive during the preparation of the thermosetting PAN-based intermediate film may reduce a melting point of the thermosetting PAN-based polymer material to below a thermal decomposition temperature, so as to ensure that a thermosetting PAN-based polymer fiber may be obtained through a melt stretching method.

As a specific implementation of the raw material composition described above in the present disclosure, the modification additive is the carbonate modification additive.

As a specific implementation of the raw material composition described above in the present disclosure, the carbonate ester-based modification additive includes one or more of ethylene carbonate, propylene carbonate, butylene carbonate, and ethyl methyl carbonate.

As a specific implementation of the raw material composition described above in the present disclosure, the nitrile modification additive includes one or more of butyronitrile, succinonitrile, valeronitrile, hexanenitrile, adiponitrile, heptanitrile, octanenitrile, n-octyl cyanide, dodecanenitrile, n-dodecyl cyanide and myristonitrile.

As a specific implementation of the raw material composition described above in the present disclosure, cations in the ionic liquid modification additive include one or more of alkyl quaternary ammonium cations, alkyl quaternary phosphonium cations, N,N-dialkyl imidazole cations, and N-alkylpyridine cations, and anions include one or more of halide ions, acetate ions, nitrate ions, tetrafluoroborate ions, and trifluoroacetate ions. In some embodiments of the present disclosure, the ionic liquid modification additive may be octadectyldimethylhydroxyethyl quaternary ammonium nitrate.

As a specific implementation of the raw material composition described above in the present disclosure, the lithium salt includes one or more of lithium hexafluorophosphate, lithium perchlorate, lithium bis(oxalate)borate, lithium difluoro(oxalato)borate, lithium trifluoromethanesulfonate, lithium bis(trifluoromethanesulphonyl)imide, and lithium bis(fluorosulfonyl)imide.

As a specific implementation of the raw material composition described above in the present disclosure, the thermosetting PAN-based polymer material is prepared through copolymerization of monomers comprising acrylonitrile or derivatives thereof, and itaconic acid or derivatives thereof.

As a specific implementation of the raw material composition described above in the present disclosure, the thermosetting PAN-based polymer material is a thermosetting PAN-based polymer fiber, the number of the thermosetting PAN-based polymer fibers per unit film length is $1\times10^3$-$1\times10^7$/cm, and the diameter of the thermosetting PAN-based polymer fiber is 50 nm-2 $\mu$m. The number of the thermosetting PAN-based polymer fibers per unit film length is obtained through calculation according to the following formula 1):

$$N = 4\rho'/(d\rho) \qquad \text{formula 1).}$$

In the formula 1), $\rho'$ is an intermediate compaction density of the thermosetting PAN-based polymer fiber, in g/cm$^3$; $\rho$ is the density of the thermosetting PAN-based polymer fiber, in g/cm$^3$; and d is an average diameter of the thermosetting PAN-based polymer fiber, in cm.

In another aspect, the present disclosure further provides a method for preparing a thermosetting PAN-based intermediate film. The preparation method includes: pre-mixing a raw material composition, then performing melt extrusion, and then performing stretching treatment and/or thin film shaping treatment on a prototype thick film obtained by extrusion, so as to obtain the thermosetting PAN-based intermediate film. The raw material composition is the foregoing raw material composition for preparing the thermosetting PAN-based intermediate film.

In the present disclosure, by performing stretching treatment on the prototype thick film obtained by extrusion, the number of the thermosetting PAN-based polymer fibers per unit film area, the number of polymer interfaces, and the number of the ceramic materials and polymer interfaces (when the ceramic material is used) may be increased, such that the thermosetting PAN-based intermediate film has a three-dimensional interpenetrating connectivity morphological structure that is commonly formed by the aggregation of the thermosetting PAN-based polymer fibers, the ceramic material with random stacking/agglomeration or dispersion, polymer interface, the ceramic material and the polymer interface (when the ceramic material is used). Therefore, the ionic conductivity of the thermosetting PAN-based intermediate film may be improved, and it may be ensured that the thermosetting PAN-based intermediate film reaches a final desired thickness.

In the thermosetting PAN-based intermediate film provided in the present disclosure, the ceramic material is randomly distributed between three-dimensional interpenetrating connectivity polymer phases in the form of stacking/agglomeration or dispersion, and may increase amorphous regions of the polymer, increase the number of interfaces of solid electrolyte, promote dissociation of the lithium salt, etc.

As a specific implementation of the method for preparing a thermosetting PAN-based intermediate film described above in the present disclosure, the temperature of melt extrusion is 80-350 °C, preferably, 120-300 °C.

In the solid electrolyte film, part of the lithium salt is dissolved in the polymer material, and the part of the lithium salt is aggregated or attached to the surface of the polymer through certain interaction with the polymer material in an amorphous state (as the lithium salt melts during processing, the lithium salt is subjected to a certain bonding effect with the thermosetting PAN-based polymer, making the lithium salt no longer crystalline but amorphous). Compared to full dissolution of the lithium salt prepared using a solution method or full enrichment of the lithium salt prepared using electrostatic spinning, the ionic conductivity of the thermosetting PAN-based intermediate film having such a lithium salt presence mode provided in the present disclosure is the highest.

As a specific implementation of the method for preparing a thermosetting PAN-based intermediate film described above in the present disclosure, the preparation method includes the following steps.

At step (1), the raw material composition for preparing the thermosetting PAN-based intermediate film is pre-mixed, so as to obtain a pre-mixed material.

At step (2), melt extrusion is performed on the pre-mixed material to obtain a prototype thick film.

At step (3), then stretching treatment and/or thin film shaping treatment is performed on the prototype thick film to obtain the thermosetting PAN-based intermediate film.

Or the preparation method includes the following steps.

At step (1)', a thermosetting PAN-based polymer material and a modification additive in the raw material composition for preparing the thermosetting PAN-based intermediate film is pre-mixed, so as to obtain a pre-mixed material.

At step (2)', melt extrusion is performed on the pre-mixed material to obtain a prototype thick film.

At step (3)', then stretching treatment and/or thin film shaping treatment is performed on the prototype thick film to obtain an intermediate film product.

At step (4)', the intermediate film product is soaked in a lithium salt solution or the lithium salt solution on two sides of the intermediate film product is uniformly sprayed, and then the intermediate film product sprayed with the lithium salt solution or the intermediate film product obtained after soaking is dried to remove solvents, so as to obtain the thermosetting PAN-based intermediate film.

As a specific implementation of the preparation method described above in the present disclosure, in the step (2) and step (2)', devices used by melt extrusion respectively independently include one of or a combination of a variety of a ball mill, an internal mixer, a single screw, a twin screw, a multi-screw, and a granulator.

As a specific implementation of the preparation method described above in the present disclosure, in the step (2) and step (2)', the thicknesses of the prototype thick films respectively independently are 100 $\mu$m-2 mm.

As a specific implementation of the preparation method described above in the present disclosure, in the step (3) and step (3)', the stretching treatment respectively independently includes horizontal stretching, longitudinal stretching, or bi-directional stretching.

As a specific implementation of the preparation method described above in the present disclosure, in the step (4)', the temperature of drying is 70-90 °C.

As a specific implementation of the preparation method described above in the present disclosure, in the step (4)', a solvent used in the lithium salt solution is any one of conventional solvents, and preferably, the solvent is isopropanol and/or dimethyl ether.

In still another aspect, the present disclosure further provides a thermosetting PAN-based intermediate film. The thermosetting PAN-based intermediate film is prepared by the foregoing preparation method.

As a specific implementation of the thermosetting PAN-based intermediate film described above in the present disclosure, the thermosetting PAN-based intermediate film is a liquid electrolyte diaphragm or a solid electrolyte film; preferably, the thickness of the solid electrolyte film is 1-100 $\mu$m, more preferably, 5-60 $\mu$m, and further preferably, 15-30 $\mu$m; and preferably, a compaction density of the solid electrolyte film ranges from 0.8 to 4.5 g/cm$^3$.

Finally, the present disclosure further provides an electrochemical device, including a liquid electrochemical device and a solid electrochemical device. The liquid electrochemical device includes a diaphragm; the solid electrochemical device includes a solid electrolyte film; and the diaphragm is the foregoing liquid electrolyte diaphragm, and the solid electrolyte film is the foregoing solid electrolyte film.

The liquid electrochemical device is not limited to a liquid ion battery (such as a liquid lithium ion battery, a liquid sodium ion battery, a liquid zinc ion battery, etc.); and the solid electrochemical device is not limited to a solid battery.

Compared with the prior art, the present disclosure can achieve the following technical effects.

1) The modification additive used in the present disclosure is an additive that improves ion conduction, reduces the melting point of the polymer, and improves film-formation processing performance. The raw material composition for preparing the thermosetting PAN-based intermediate film is compounded with the thermosetting PAN-based polymer material by adding the modification additive, such that the melting point temperature of the thermosetting PAN-based polymer material may be reduced to below the thermal decomposition temperature, so as to ensure that the thermosetting PAN-based polymer material is not thermally decomposed during the melting process, thereby meeting implementation conditions of melt extrusion stretching process. Therefore, continuous production of the thermosetting PAN-based intermediate film may be performed by using the melt extrusion stretching process, and the ionic conductivity of the prepared intermediate film may further be improved by acting as a lithium ion conductive medium (i.e., the thermosetting PAN-based intermediate film provided in the present disclosure may perform ion conduction), thereby significantly improving the overall performance of the film.

2) Compared to an existing conventional spray spinning process that may prepare a solid electrolyte film with a large specific interface area in the art, the melt extrusion stretching method used by the preparation method provided in the present disclosure is simple and mature in process, high in efficiency, high in consistency, and may achieve continuous mass production, such that while the overall performance of the prepared intermediate film is greatly improved, the problem of high industrialization difficulty is solved; and no solvent and any related treatment are used in the preparation method, such that the preparation method is green, environment-friendly, environment pollution free, and low in energy consumption.

## Brief Description of the Drawings

In order to more clearly illustrate the technical solutions in the embodiments of the present disclosure or prior art, the drawings used in the description of the embodiments will be briefly described below. It is apparent that the drawings in the following descriptions are some embodiments of the present disclosure. Other drawings can be obtained from those skilled in the art according to these drawings without any creative work.

Fig. 1 is a material object picture of a thermosetting PAN-based composite solid electrolyte film according to Embodiment 1 of the present disclosure.

Fig. 2 is a scanning electron micrograph of a thermosetting PAN-based composite solid electrolyte film according to Embodiment 1 of the present disclosure.

Fig. 3a is a result diagram of ionic conductivity of a thermosetting PAN-based composite solid electrolyte film according to Embodiment 1 of the present disclosure.

Fig. 3b is a result diagram of ionic conductivity of a thermosetting PAN-based composite solid electrolyte film according to Embodiment 2 of the present disclosure.

Fig. 3c is a result diagram of ionic conductivity of a thermosetting PAN-based composite solid electrolyte film according to Embodiment 3 of the present disclosure.

Fig. 3d is a result diagram of ionic conductivity of a thermosetting PAN-based composite solid electrolyte film according to Embodiment 4 of the present disclosure.

Fig. 4 is a charge-discharge cycle curve of a solid lithium ion battery according to an application embodiment of the present disclosure.

## Detailed Description of the Embodiments

The "ranges" disclosed in the present disclosure are given in the form of lower and upper limits. The ranges may be one or more lower limits, and one or more upper limits, respectively. The given range is limited by selecting a lower limit and an upper limit. The given lower limit and upper limit define the boundaries of a special range. All ranges limited in this way are combinable, i.e., any lower limit may be combined with any upper limit to form a range. For example, 60-120 and 80-110 ranges are listed for specific parameters, and it is understood that the 60-110 and 80-120 ranges may also be expected. In addition, if minimum range values listed are 1 and 2, and maximum range values listed are 3, 4, and 5, the following ranges may be all expected: 1-3, 1-4, 1-5, 2-3, 2-4, and 2-5.

In the present disclosure, unless otherwise indicated, a value range "a-b" indicates an abbreviated representation of any combination of real numbers between a and b, where both a and b are real numbers. For example, a value range "being a real number indicates that all real numbers between "shown in the present disclosure have been listed in the present disclosure, and "is simply an abbreviated representation of the combination of these values.

In the present disclosure, all implementations mentioned in the present disclosure, as well as preferred implementations, may be combined with each other to form new technical solutions, if not specifically indicated.

In the present disclosure, all technical features mentioned in the present disclosure, as well as preferred features, may be combined with each other to form new technical solutions, if not specifically indicated.

In order to make the objectives, technical solutions and advantages of the present disclosure clearer, the present disclosure is further described in detail with reference to the drawings and embodiments. The embodiments described below are a portion of the embodiments of the present disclosure and not all of the embodiments, and are used only for the purpose of describing the present disclosure and should not be considered as limiting the scope of the present disclosure. Based on the embodiments in the present disclosure, all other embodiments obtained by those of ordinary skill in the art without creative work shall fall within the protection scope of the present disclosure. If specific conditions are not indicated in the embodiments, the implementations are carried out in accordance with the conventional conditions or the conditions recommended by manufacturers. Reagents or instruments used are conventional products that may be purchased commercially if the manufacturers are not specified.

Embodiment 1

This embodiment provided a thermosetting PAN-based composite solid electrolyte film, which was prepared by using a preparation method including the following steps.

(1) 50 g of polyacrylonitrile copolymer powder (Jiema, PAN3-250000), 10 g of lithium bis(trifluoromethanesulphonyl)imide, 3 g of ethylene carbonate, and 10g of silica (D50 particle size being 210 nm) were pre-mixed for 10 min at a rotary speed of 1200 rpm in a closed planetary mixing device.

(2) The pre-mixed material was taken out, and added in a single-screw extruder for melt extrusion, a melt extrusion temperature was 195 °C, and the thickness of a prototype thick film obtained through melt extrusion was 350 $\mu$m.

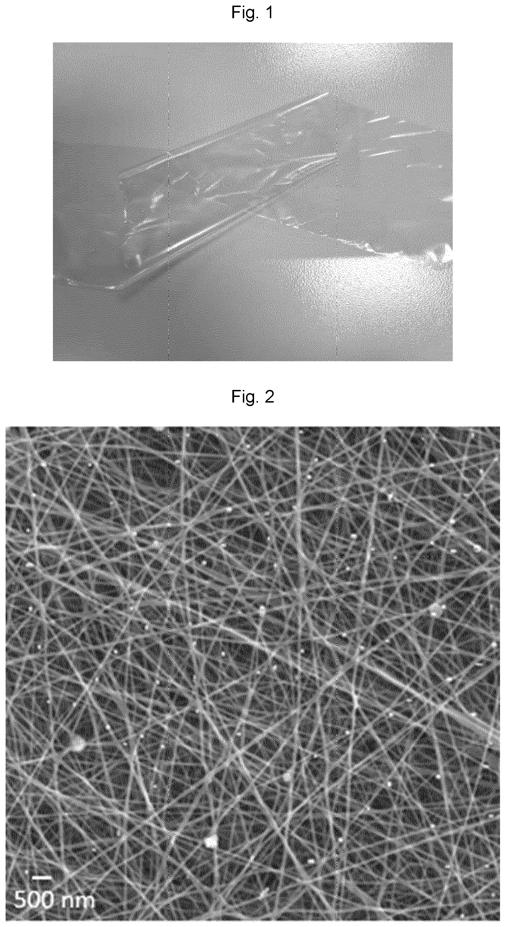

(3) Bi-directional stretching and cooling shaping were further performed on the prototype thick film, and then a shaped solid electrolyte thin film with a thickness being 31 $\mu$m was obtained, i.e., the thermosetting PAN-based composite solid electrolyte film, as shown in Fig. 1.

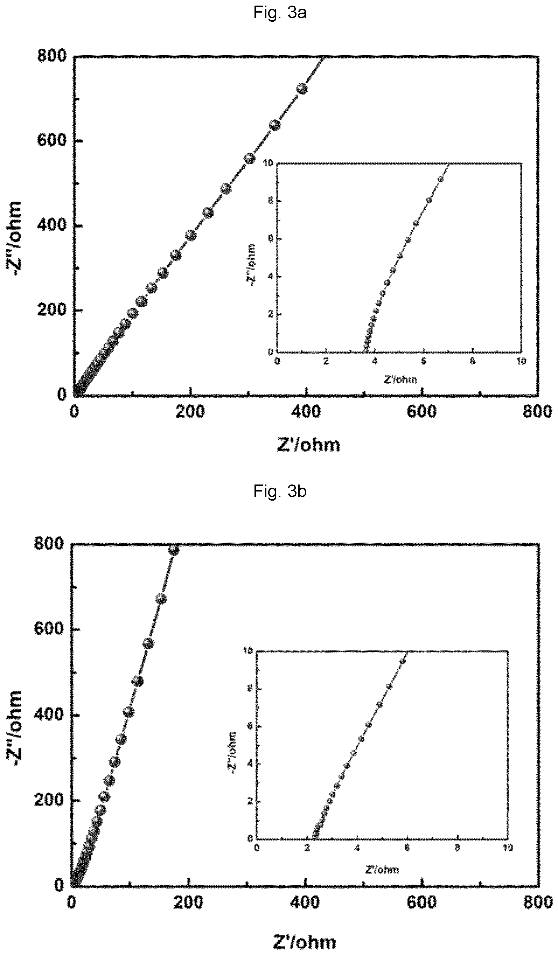

Operations of step (1)-step (3) needed to be performed in a drying room environment of which humidity did not exceed 5%.
A compaction density of the thermosetting PAN-based composite solid electrolyte film prepared in this embodiment was 3.2 g/cm$^3$, the density of a thermosetting PAN-based polymer fiber was 1.184 g/cm$^3$, the diameter of the thermosetting PAN-based polymer fiber was 200 nm, and the number of the thermosetting PAN-based polymer fibers per unit film area calculated according to the foregoing formula 1) was 5.4×10$^5$/cm; and a result diagram of ionic conductivity of the thermosetting PAN-based composite solid electrolyte film was shown in Fig. 3a, and the ionic conductivity obtained through calculation of data shown in Fig. 3a was 5.4×10$^{-4}$S/cm.
A scanning electron micrograph of the thermosetting PAN-based composite solid electrolyte film prepared in this embodiment was shown in Fig. 2. From Fig. 2, it might be seen that, in the thermosetting PAN-based composite solid electrolyte film, aggregation of strip-shaped polymer fibers with a diameter being about 200 nm was formed, and ceramic particles were randomly stacked/agglomerated or dispersed among the polymer fibers. Therefore, the polymer fibers, and the polymer fibers and the ceramic particles were interlaced and overlapped with each other, to commonly form a high interface network having a three-dimensional interpenetrating connectivity structure, such that the ionic conductivity of the thermosetting PAN-based composite solid electrolyte film might be effectively improved.
In addition, in the thermosetting PAN-based composite solid electrolyte film provided in the present disclosure, a ceramic material was randomly distributed between three-dimensional interpenetrating connectivity polymer phases in the form of stacking/agglomeration or dispersion, and may increase amorphous regions of the polymer, increase the number of interfaces of solid electrolyte, promote dissociation of the lithium salt, etc.

Embodiment 2

This embodiment provided a thermosetting PAN-based composite solid electrolyte film, which was prepared by using a preparation method including the following steps.

(1) 35g of polyacrylonitrile copolymer powder (Jiema, PAN3-250000), 3g of lithium perchlorate, 3g of propylene carbonate, and 10g of lithium titanium aluminum phosphate (D50 particle size being 150 nm) were pre-mixed for 20 min at a rotary speed of 1500 rpm in a closed planetary mixing device.

(2) The pre-mixed material was taken out, and added in a single-screw extruder for melt extrusion, a melt extrusion temperature was 220 °C, and the thickness of a prototype thick film obtained through melt extrusion was 300 $\mu$m.

(3) Bi-directional stretching and cooling shaping were further performed on the prototype thick film, and then a shaped solid electrolyte thin film with a thickness being 25 $\mu$m was obtained, i.e., the thermosetting PAN-based composite solid electrolyte film. The above operations needed to be performed in an environment of which humidity did not exceed 5%.

A compaction density of the thermosetting PAN-based composite solid electrolyte film prepared in this embodiment was 3.8g/cm$^3$, the density of a thermosetting PAN-based polymer fiber was 1.184 g/cm$^3$, the diameter of the thermosetting PAN-based polymer fiber was 80 nm, and the number of the thermosetting PAN-based polymer fibers per unit film area calculated according to the foregoing formula 1) was $1.6 \times 10^6$/cm; and a result diagram of ionic conductivity of the thermosetting PAN-based composite solid electrolyte film was shown in Fig. 3b, and the ionic conductivity obtained through calculation of data shown in Fig. 3b was $6 \times 10^{-4}$S/cm.

Embodiment 3

This embodiment provided a thermosetting PAN-based composite solid electrolyte film, which was prepared by using a preparation method including the following steps.

(1) 60 g of polyacrylonitrile copolymer powder (Jiema, PAN3-250000), 6g of lithium bis(fluorosulfonyl)imide, 6g of 2-pentanol, octadectyldimethylhydroxyethyl quaternary ammonium nitrate, and 20g of a lithium lanthanum zirconium tantalum oxygen fast ion conductor (D50 particle size being 150 nm) were pre-mixed for 15 min at a rotary speed of 2000 rpm in a closed planetary mixing device.

(2) The pre-mixed material was taken out, and added in a single-screw extruder for melt extrusion, a melt extrusion temperature was 200 °C, and the thickness of a prototype thick film obtained through melt extrusion was 320 μm.

(3) Bi-directional stretching and cooling shaping were further performed on the prototype thick film, and then a shaped solid electrolyte thin film with a thickness being 33 μm was obtained, i.e., the thermosetting PAN-based composite solid electrolyte film. The above operations needed to be performed in an environment of which humidity did not exceed 5%.

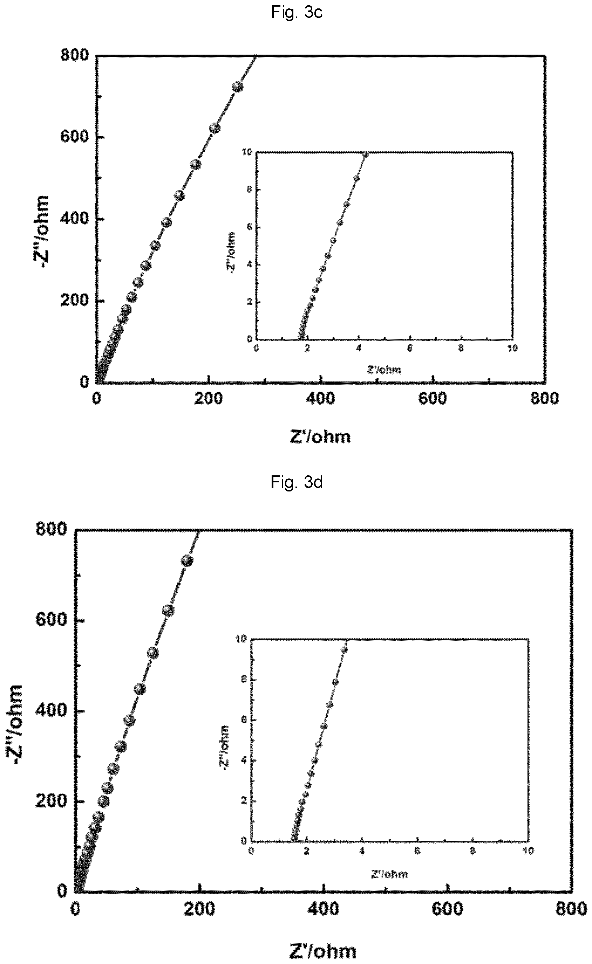

A compaction density of the thermosetting PAN-based composite solid electrolyte film prepared in this embodiment was 4.1g/cm$^3$, the density of a thermosetting PAN-based polymer fiber was 1.184 g/cm$^3$, the diameter of the thermosetting PAN-based polymer fiber was 240 nm, and the number of the fibers per unit film area calculated according to the foregoing formula 1) was $5.7 \times 10^5$/cm; and a result diagram of ionic conductivity of the thermosetting PAN-based composite solid electrolyte film was shown in Fig. 3c, and the ionic conductivity obtained through calculation of data shown in Fig. 3c was $5 \times 10^{-4}$S/cm.

Embodiment 4

This embodiment provided a thermosetting PAN-based composite solid electrolyte film, which was prepared by using a preparation method including the following steps.

(1) 60 g of polyacrylonitrile copolymer powder (Jiema, PAN3-250000), 15 g of lithium hexafluorophosphate, 12 g of succinonitrile, and 6 g of aluminum oxide (D50 particle size being 170 nm) were pre-mixed for 10 min at a rotary speed of 2000 rpm in a closed planetary mixing device.

(2) The pre-mixed material was taken out, and added in a single-screw extruder for melt extrusion, a melt extrusion temperature was 180 °C, and the thickness of a prototype thick film obtained through melt extrusion was 330 μm.

(3) Bi-directional stretching and cooling shaping were further performed on the prototype thick film, and then a shaped solid electrolyte thin film with a thickness being 35 μm was obtained, i.e., the thermosetting PAN-based composite solid electrolyte film. The above operations needed to be performed in an environment of which humidity did not exceed 5%.

A compaction density of the thermosetting PAN-based composite solid electrolyte film prepared in this embodiment was 3.1g/cm$^3$, the density of a thermosetting PAN-based polymer fiber was 1.184 g/cm$^3$, the diameter of the thermosetting PAN-based polymer fiber was 200 nm, and the number of the fibers per unit film area calculated according to the foregoing formula 1) was $5.2 \times 10^5$/cm; and a result diagram of ionic conductivity of the thermosetting PAN-based composite solid electrolyte film was shown in Fig. 3d, and the ionic conductivity obtained through calculation of data shown in Fig. 3d was $2.3 \times 10^{-4}$S/cm.

Embodiment 5

This embodiment provided a thermosetting PAN-based composite solid electrolyte film, which was prepared by using a preparation method including the following steps.

(1) 60 g of polyacrylonitrile copolymer powder (Jiema, PAN3-250000), 12 g of lithium bis(oxalate)borate, 15 g of succinonitrile, and 9 g of halide electrolyte Li$_3$InCl$_6$ (D50 particle size being 200 nm) were pre-mixed for 20 min at a rotary speed of 1500 rpm in a closed planetary mixing device.

(2) The pre-mixed material was taken out, and added in a single-screw extruder for melt extrusion, a melt extrusion temperature was 200°C, and the thickness of a prototype thick film obtained through melt extrusion was 280 μm.

(3) Bi-directional stretching and cooling shaping were further performed on the prototype thick film, and then a shaped solid electrolyte thin film with a thickness being 22 μm was obtained, i.e., the thermosetting PAN-based composite solid electrolyte film. The above operations needed to be performed in an environment of which humidity did not exceed 5%.

A compaction density of the thermosetting PAN-based composite solid electrolyte film prepared in this embodiment was 4.0g/cm$^3$, the density of a thermosetting PAN-based polymer fiber was 1.184 g/cm$^3$, the diameter of the thermosetting PAN-based polymer fiber was 100 nm, and the number of the fibers per unit film area calculated according to the foregoing formula 1) was $1.4 \times 10^6$/cm; and the ionic conductivity of the thermosetting PAN-based composite solid electrolyte film was $8 \times 10^{-4}$S/cm.

Comparative embodiment 4-1

In this comparative embodiment, a thermosetting PAN-based composite solid electrolyte film prepared without adding a modification additive. Preparation included the following specific preparation.

(1) 60 g of polyacrylonitrile copolymer powder (Jiema, PAN3-250000), 15 g of lithium hexafluorophosphate, and 6 g of aluminum oxide (D50 particle size being 170 nm) were pre-mixed for 10 min at a rotary speed of 2000 rpm in a closed planetary mixing device.

(2) The pre-mixed material was taken out, and added in a single-screw extruder for melt extrusion, a melt extrusion temperature was set to 220°C, but a film could not be extruded, and the reason was analyzed to be that it was not melted at the current temperature, and thus could not be extruded; and the melt extrusion temperature was gradually risen to above 240 °C, the film could still not be extruded, but it was found that the powder has changed color, and a gas released, such that it indicated that at the temperature condition, dehydrogenation and thermal cracking reactions started to occur in the polyacrylonitrile copolymer.

By comparing Embodiment 4 and Comparative embodiment 4-1, it might be learned that, if the modification additive was not added when the thermosetting PAN-based composite solid electrolyte film was prepared, a melting point temperature (still at the original 310 °C or so) of the polyacrylonitrile copolymer could not be reduced, and in this case, the polyacrylonitrile copolymer during the preparation process was the first to be subjected to thermal cracking, ultimately leading to the inability to prepare the thermosetting PAN-based composite solid electrolyte film with the high compaction density and high ionic conductivity by a melt stretching method.

Application embodiment 1

This application embodiment provided a solid lithium ion battery. Solid electrolyte used in the solid lithium ion battery was the thermosetting PAN-based composite solid electrolyte film provided in Embodiment 1 of the present disclosure. The assembling of the solid lithium ion battery included the following specific steps.

1) Using a high nickel ternary positive electrode, i.e., Li(Ni$_{0.8}$Mn$_{01}$Co$_{0.1}$)O$_2$, and NCM811 as positive electrode materials, the NCM811, a carbon black conductive agent (SP), and polyvinylidene fluoride (PVDF) were mixed according to mass fractions (the mass fractions obtained through calculation based on a total weight of the NCM811, the carbon black conductive agent, and the polyvinylidene fluoride) being 97%, 1.3%, and 1.7%, and a NCM811 positive electrode plate was prepared through coating, rolling, electrode plate punching, and baking, with a carrying capacity being 44mg/cm$^2$ and a diameter being 12 mm.
Operations of step 1) needed to be performed in a drying room environment of which humidity did not exceed 5%.

2) The NCM811 positive electrode plate with the diameter being 12 mm prepared in step 1) was used as a positive electrode plate, the thermosetting PAN-based composite solid electrolyte film provided in Embodiment 1 was an intermediate film, without extra adding any liquid dropwise, a conventional lithium metal sheet with a diameter being 14 mm was finally covered as a negative electrode plate, sealing was performed, and the assembling of a button battery was completed.

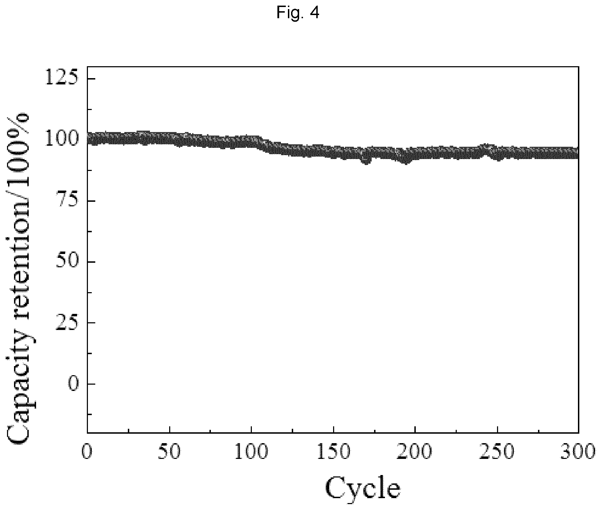

Step 2) was performed in a glove box.
Charge-discharge cycle analysis was performed on the solid lithium ion battery provided in this application embodiment. A charge-discharge cycle curve of the solid lithium ion battery was shown in Fig. 4. From Fig. 4, it might be seen that, the thermosetting PAN-based composite solid electrolyte film prepared in Embodiment 1 was used as the intermediate film to assemble a full-solid button battery. The battery might be stably cycled for more than 300 times to achieve an advanced level of current research, such that the thermosetting PAN-based composite solid electrolyte film provided in the embodiments of the present disclosure might not only provide high ionic conductivity, but also effectively reduce interfacial impedance, so as to ensure the stable cycling of a full-solid battery.
The above was only for the specific embodiments of the present disclosure, could not be limited to the scope of implementation of the present disclosure, such that the replacement of equivalent components, or equivalent changes and modifications in accordance with the scope of the patent protection of the present disclosure, should still all fall within the scope of the patent. In addition, free combinations between the technical features, between technical features and technical inventions, and between technical inventions might all be used in the present disclosure.

**Claims**

1. A raw material composition for preparing a thermosetting PAN-based intermediate film, comprising a thermosetting PAN-based polymer material, a lithium salt, and a modification additive, wherein

   a mass ratio of the thermosetting PAN-based polymer material to the lithium salt is 20:1-3:1, and a mass ratio of the thermosetting PAN-based polymer material to the modification additive is 18:1-3:1; and
   the modification additive comprises one of or a combination of several of a carbonate modification additive, a nitrile modification additive, and an ionic liquid modification additive.

2. The raw material composition according to claim 1, further comprising a ceramic material, wherein taking a total weight of the thermosetting PAN-based polymer material as 100%, a use amount of the ceramic material is 5-80wt%;

   preferably, the use amount of the ceramic material is 10-50wt%;
   preferably, the ceramic material comprises an inorganic ionic conductor and/or inorganic non-ionic conductor;
   more preferably, the inorganic ionic conductor comprises one or more of oxide, halide, sulphide, nitride, and carbide, and the inorganic non-ionic conductor comprises one or more of metal oxide and non-metal oxide;
   further preferably, the ceramic material comprises one or more of titanium-containing oxide, aluminum-containing oxide, boron-containing oxide, zirconium-containing oxide, and silicon containing oxide; and
   further preferably, the ceramic material comprises one of or a combination of several of silicon dioxide, alumina, lithium titanium aluminum phosphate, lithium borate, lithium borate ester, lithium zirconate, garnet type lithium lanthanum zirconium oxygen, lithium indium chloride halide, argyrodite type sulfide, lithium borohydride, and lithium lanthanum zirconium tantalum oxygen fast ion conductors.

3. The raw material composition according to claim 1, wherein the modification additive is the carbonate modification additive or the nitrile modification additive; and
   preferably, the modification additive is the carbonate modification additive.

4. The raw material composition according to any one of claims 1 to 3, wherein the carbonate modification additive comprises one or more of ethylene carbonate, propylene carbonate, 2,3-butylene carbonate, and ethyl methyl carbonate;

   preferably, the nitrile modification additive comprises one or more of butyronitrile, succinonitrile, valeronitrile, hexanenitrile, adiponitrile, heptanitrile, octanenitrile, n-octyl cyanide, dodecanenitrile, n-dodecyl cyanide, myristonitrile; and
   preferably, cations in the ionic liquid modification additive comprise one or more of alkyl quaternary ammonium cations, alkyl quaternary phosphonium cations, N,N-dialkyl imidazole cations, and N-alkylpyridine cations, and anions comprise one or more of halide ions, acetate ions, nitrate ions, tetrafluoroborate ions, and trifluoroacetate ions.

5. The raw material composition according to any one of claims 1 to 3, wherein the lithium salt comprises one or more of lithium hexafluorophosphate, lithium perchlorate, lithium bis(oxalate)borate, lithium difluoro(oxalato)borate, lithium trifluoromethanesulfonate, lithium bis(trifluoromethanesulphonyl)imide, and lithium bis(fluorosulfonyl)imide; and
   preferably, the thermosetting PAN-based polymer material is prepared through copolymerization of monomers comprising acrylonitrile or derivatives thereof, and itaconic acid or derivatives thereof.

6. The raw material composition according to any one of claims 1 to 5, wherein the thermosetting PAN-based polymer material is a thermosetting PAN-based polymer fiber, the number of the thermosetting PAN-based polymer fibers per unit film length is $1\times10^3$-$1\times10^7$/cm, and the diameter of the thermosetting PAN-based polymer fiber is 50 nm-2 $\mu$m, wherein

   the number of the thermosetting PAN-based polymer fibers per unit film length is obtained through calculation according to the following formula 1):

$$N = 4\rho'/(d\rho) \qquad \text{formula 1);}$$

in the formula 1), $\rho'$ is an intermediate compaction density of the thermosetting PAN-based polymer fiber, in g/cm³; $\rho$ is the density of the thermosetting PAN-based polymer fiber, in g/cm³; and d is an average diameter of the thermosetting PAN-based polymer fiber, in cm.

7. A method for preparing a thermosetting PAN-based intermediate film, comprising:

pre-mixing a raw material composition, then performing melt extrusion, and then performing stretching treatment and/or thin film shaping treatment on a prototype thick film obtained by extrusion, so as to obtain the thermosetting PAN-based intermediate film, wherein
the raw material composition is the raw material composition for preparing the thermosetting PAN-based intermediate film according to any one of claims 1 to 6.

8. The preparation method according to claim 7, wherein the temperature of melt extrusion is 80-350 °C, preferably, 120-300 °C.

9. The preparation method according to claim 7 or 8, comprising:

step (1) pre-mixing the raw material composition for preparing the thermosetting PAN-based intermediate film, so as to obtain a pre-mixed material;
step (2) performing melt extrusion on the pre-mixed material to obtain a prototype thick film; and
step (3) then performing stretching treatment and/or thin film shaping treatment on the prototype thick film to obtain the thermosetting PAN-based intermediate film;
or the preparation method comprises:

step (1)' pre-mixing a thermosetting PAN-based polymer material and a modification additive in the raw material composition for preparing the thermosetting PAN-based intermediate film, so as to obtain a pre-mixed material;
step (2)' performing melt extrusion on the pre-mixed material to obtain a prototype thick film;
step (3)' then performing stretching treatment and/or thin film shaping treatment on the prototype thick film to obtain an intermediate film product; and
step (4)' soaking the intermediate film product in a lithium salt solution or uniformly spraying the lithium salt solution on two sides of the intermediate film product, and then performing drying, so as to obtain the thermosetting PAN-based intermediate film, wherein

preferably, in the step (2) and step (2)', devices used by melt extrusion respectively independently comprise one of or a combination of a variety of a ball mill, an internal mixer, a single screw, a twin screw, a multi-screw, and a granulator;
preferably, in the step (2) and step (2)', the thicknesses of the prototype thick films respectively independently are 100 $\mu$m-2 mm;
preferably, in the step (3) and step (3)', the stretching treatment respectively independently comprises horizontal stretching, longitudinal stretching, or bi-directional stretching;
preferably, in the step (4)', the temperature of drying is 70-90 °C; and
preferably, in the step (4)', a solvent used in the lithium salt solution comprises isopropanol and/or dimethyl ether.

10. A thermosetting PAN-based intermediate film, prepared by the method for preparing a thermosetting PAN-based intermediate film according to any one of claims 7 to 9.

11. The thermosetting PAN-based intermediate film according to claim 10, wherein the thermosetting PAN-based intermediate film is a liquid electrolyte diaphragm or a solid electrolyte film,

preferably, the thickness of the solid electrolyte film is 1-100 $\mu$m, more preferably, 5-60 $\mu$m, and further preferably, 15-30 $\mu$m; and
preferably, a compaction density of the solid electrolyte film ranges from 0.8 to 4.5 g/cm³.

12. An electrochemical device, comprising a liquid electrochemical device and a solid electrochemical device, wherein the liquid electrochemical device comprises a diaphragm; the solid electrochemical device comprises a solid electrolyte film; and the diaphragm is the liquid electrolyte diaphragm according to claim 11, and the solid electrolyte film is the solid electrolyte film according to claim 11.

Fig. 1

Fig. 2

500 nm

Fig. 3a

Fig. 3b

Fig. 3c

Fig. 3d

Fig. 4

<div style="text-align:center">**INTERNATIONAL SEARCH REPORT**</div>

| International application No. |
| --- |
| **PCT/CN2022/142124** |

**A. CLASSIFICATION OF SUBJECT MATTER**

H01M10/0565(2010.01)i;H01M10/058(2010.01)i;H01M10/05(2010.01)i;H01M50/40(2021.01)i

According to International Patent Classification (IPC) or to both national classification and IPC

**B. FIELDS SEARCHED**

Minimum documentation searched (classification system followed by classification symbols)

IPC: H01M10/-, H01M50/-

Documentation searched other than minimum documentation to the extent that such documents are included in the fields searched

Electronic data base consulted during the international search (name of data base and, where practicable, search terms used)

CNABS, CNTXT, ENTXT, DWPI, CNKI, SIPOABS, EPTXT, USTXT, JPTXT: 膜, 聚丙烯腈, 聚合物纤维, 聚衣康酸, 拉伸, 挤出, 成膜, 离子导体, 陶瓷, 碳酸酯, 腈类, 离子液体, 热固, 锂盐; film, membrane, PAN, fibre, itaconic acid, draw, stretch, ionic conductor, ceramic, carbonate, nitrile, ionic liquid, thermosetting, lithium salt

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114300741 A (HENGFEN GUANGZHOU GAOKE POWER ENERGY CO., LTD.) 08 April 2022 (2022-04-08)<br>claims 1-10, and description, paragraphs 5-102 | 1-12 |
| X | CN 1372705 A (LITHIUM POWER TECHNOLOGIES, INC.) 02 October 2002 (2002-10-02)<br>description, page 8, line 15 to page 25, line 26, and figures 1A-4 | 1-12 |
| X | CN 112054244 A (KUNSHAN BAOCHUANG NEW ENERGY TECHNOLOGY CO., LTD.) 08 December 2020 (2020-12-08)<br>description, paragraphs 11-78 | 1-2, 5-12 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 February 2023** | **21 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142124**

| Patent document cited in search report | | | Publication date (day/month/year) | Patent family member(s) | | | Publication date (day/month/year) |
|---|---|---|---|---|---|---|---|
| CN | 114300741 | A | 08 April 2022 | None | | | |
| CN | 1372705 | A | 02 October 2002 | JP | 2003508886 | A | 04 March 2003 |
| | | | | TWI | 244230 | B | 21 November 2005 |
| | | | | MY | 128815 | A | 28 February 2007 |
| | | | | US | 6645675 | B1 | 11 November 2003 |
| | | | | EP | 1224706 | A1 | 24 July 2002 |
| | | | | WO | 0117051 | A1 | 08 March 2001 |
| | | | | AU | 6921700 | A | 26 March 2001 |
| | | | | CN | 1251347 | C | 12 April 2006 |
| CN | 112054244 | A | 08 December 2020 | None | | | |

Form PCT/ISA/210 (patent family annex) (July 2022)

**EP 4 421 933 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110165291 A